# EUROPÄISCHE PATENTSCHRIFT

(11) **EP 1 315 636 B1**
(45) Veröffentlichungstag und Bekanntmachung des Hinweises auf die Patenterteilung: **21.07.2004**
(21) Anmeldenummer: 01974182.6
(22) Anmeldetag: 14.08.2001
(51) Int. Cl.: B60N 2/28, B60R 22/18, B60R 7/02

(54) **KUNSTSTOFFUMMANTELTE VERZURRÖSE MIT VERSTÄRKUNGSEINLAGE**
PLASTIC-COVERED ANCHOR STUD COMPRISING A REINFORCED INSERT
BOUCLE DE FIXATION RECOUVERTE DE PLASTIQUE COMPRENANT UN SYSTEME DE RENFORT

(30) Priorität: 05.09.2000 DE 10043641
(43) Veröffentlichungstag der Anmeldung: 04.06.2003
(73) Patentinhaber: HUF HÜLSBECK & FÜRST GMBH & CO. KG, 42551 Velbert (DE)
(72) Erfinder: PLATZER, Bruno, 42551 Velbert (DE); KLEIN, Helmut, 42549 Velbert (DE)
(74) Vertreter: Mentzel, Norbert, Dipl.-Phys.
(86) Internationale Anmeldenummer: PCT/EP2001/009358
(87) Internationale Veröffentlichungsnummer: WO 2002/020305

(56) Entgegenhaltungen:
- EP-A- 0 507 161
- WO-A-97/10121
- DE-A- 19 946 579
- DE-U- 29 911 871
- PATENT ABSTRACTS OF JAPAN vol. 1995, no. 06, 31. Juli 1995 (1995-07-31) -& JP 07 061268 A (SUZUKI MOTOR CORP), 7. März 1995 (1995-03-07)
- PATENT ABSTRACTS OF JAPAN vol. 1997, no. 02, 28. Februar 1997 (1997-02-28) -& JP 08 282385 A (HOWA KASEI KK), 29. Oktober 1996 (1996-10-29)

## Beschreibung

Die Erfindung richtet sich auf einen Halter, insbesondere zum Verzurren von Gepäckteilen oder Kindersitzen im Kraftfahrzeug der im Oberbegriff des Anspruchs 1 angegebenen Art. Diese Halter finden vorwiegend Anwendung im Kofferraumbereich oder im Rücksitzbereich eines Kraftfahrzeuges. Sie dienen dazu, die im Kraftfahrzeug zu transportierenden Lasten oder Kindersitze am Fahrzeug zu sichern, damit diese nicht bei einem Unfall oder bei einer Vollbremsung frei im Fahrzeuginneren herumgeschleudert werden. Die Kräft, die auf den Halter bei einer Vollbremsung oder bei einem Unfall wirken, sind sehr hoch, weshalb es einer stabilen Ausführungsform des Halters benötigt. Damit der Halter nicht beim Be- und Entladen des Kofferraums oder im Sitzbereich stört, ist er mit seinem Sockel im Kofferraumboden oder im Bereich der Sitzbank versenkt, so daß er eine ebene Fläche mit dem Kofferraumboden oder der Sitzbank bildet. Ebenfalls ist die schwenkbar gelagerte Öse in eine Ruheposition überführbar, in der sie nicht aus dem Sockel hervorragt.

Ein bekannter Halter zum Verzurren von Gepäckteilen oder Kindersitzen im Kraftfahrzeug der genannten Art besteht aus einem einteiligen, massiven Sockel aus einer Gußlegierung. Der Sockel ist kastenförmig ausgestaltet mit einem überlappenden Randbereich. Dieser kastenförmige Sockel besteht aus vier Seitenwänden und einem Boden. Damit die Befestigung des Halters am Kraftfahrzeug sich nicht störend für die Benutzung auswirkt, ist der Halter mit seinem Boden an dem Kraftfahrzeug kräfteaufnehmend befestigt. Die vier Seitenwände des Sockels sind notwendig, um einerseits den Sockel fertigungstechnisch einfach als Gußteil herstellen zu können und anderseits das optische Gefallen des Halters im angebrachten Zustand im Kofferraum zu gewährleisten. Als Nachteil dieses Halters ist das hohe Gewicht zu nennen, welches gerade im Kraftfahrzeugbau eine wesentliche Rolle spielt. Des Weiteren muß der Sockel oberflächenbehandelt, wie z. B. lackiert oder verchromt werden, damit er ein gefälliges Aussehen erreicht.

In der gattungsgemäßen JP 7 061 268 wird ein Halter für Kindersitze gemäß dem Oberbegriff des Anspruchs 1 veröffentlicht.

Der Erfindung liegt die Aufgabe zugrunde, einen zuverlässigen Halter, der im Oberbegriff des Anspruchs 1 genannten Art zu entwickeln, der leicht, aber stabil genug ist und ein wohl fälliges Aussehen hat. Dieses wird erfindungsgemäß durch die im kennzeichnenden Teil des Anspruchs 1 angeführten Maßnahmen erreicht, denen folgende besondere Bedeutung zukommt.

Erfindungsgemäß enthält der Halter eine zumindest teilweise oder ganz Kunststoff umgebene Verstärkungseinlage. Zwar ist der Sockel auch kastenförmig ausgestaltet, aber die Verstärkungseinlage enthält nur einen Boden und drei Seitenwände. Die vierte Seitenwand des Sockels, die nicht durch die Verstärkungseinlage ausgebildet ist, besteht nur aus Kunststoff. Die Verstärkungseinlage dient nur zur Kraftaufnahme des Halters. Aus diesem Grund wird an das Material der Verstärkungseinlage nur mechanische Anforderungen gestellt, d. h. das Material muß geeignet sein, die entstehenden Kräfte an dem Halter schadenfrei zu überstehen. Die optische Gefälligkeit des Halters wird durch den Kunststoffmantel des Sockels realisiert. Hierdurch ist man in der Wahl des Materials und dem Herstellungsverfahren der Verstärkungseinlage frei. Somit lassen sich als Vorteile nennen, einerseits die deutliche Gewichtsreduzierung des Halters bei gleicher Stabilität und andererseits Kosteneinsparungen durch das veränderte Herstellungsverfahren. Auf eine zusätzliche Oberflächenbehandlung kann nach dem Umhüllen bzw. dem Ummanteln der Verstärkungseinlage mit Kunststoff gänzlich verzichtet werden, da der Halter nach diesem Fertigungsschritt ein optisch gefälliges Aussehen hat.

Weiter ist es von Vorteil, wenn die Verstärkungseinlage einfach mit Kunststoff umspritzt ist. Dabei bildet der Kunststoff einen schützenden Kunststoffmantel um die Verstärkungseinlage, der selbst keiner weiteren Oberflächenbehandlung mehr bedarf und ein gefälliges Aussehen hat.

Auch ist es vorteilhaft, wenn die Verstärkungseinlage mit einem zusätzlichen bzw. separaten Kunststoffmantel umgeben ist, der seinerseits selbst an der Verstärkungseinlage befestigbar ist. Dieser Kunststoffmantel kann unabhängig von dem restlichen Halter gefertigt werden (also auch in einer anderen Fertigungsstätte), da er anschließend nur beim Zusammenbauen des Halters angebracht wird. Dabei kann der separate Kunststoffmantel mittels einer Clipsverbindung an der Verstärkungseinlage befestigt werden.

Vorteilhafterweise ist die Verstärkungseinlage materialeinheitlich und einstückig ausgebildet mit einem doppelwandigen Boden. Hierdurch ist die Verstärkungseinlage besonders stabil und kann bei minimalen Materialeinsatz optimal Kräfte aufnehmen. Dieses führt zu einer weiteren Gewichtsreduzierung des Halters bei gleichen Herstellungskosten.

Weitere Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt. Es zeigen:
- Fig. 1,: in Draufsicht, einen Halter mit einer Kunststoff umspritzten Verstärkungseinlage mit einer schwenkbar gelagerten Öse, die in einem Sockel eben eingebettet ist (sog. Ruheposition),
- Fig. 2,: den Schnitt II - II aus der Fig. 1, in einer Ruheposition der Öse,
- Fig. 3,: den Schnitt III - III aus der Fig. 1 in derselben Position der Öse, wie aus Fig. 1 und 2,

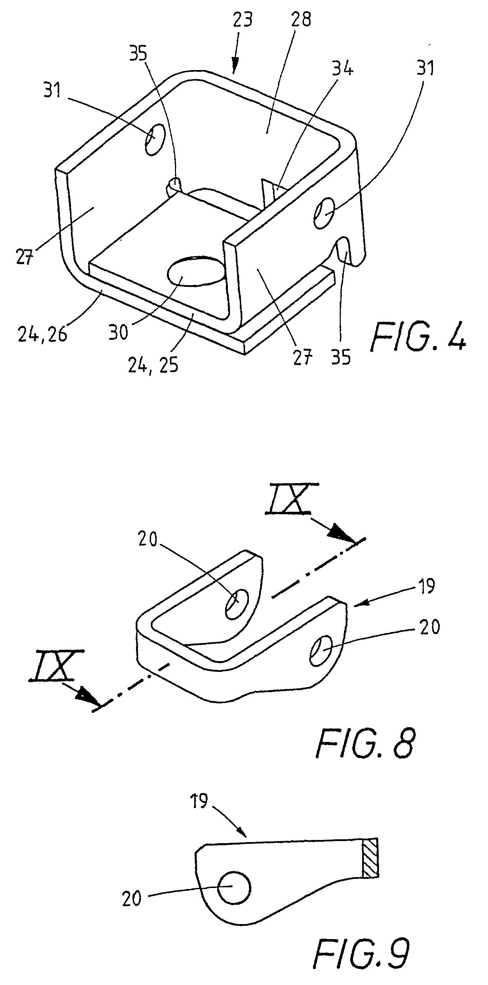

- Fig. 4,: in perspektivischer Darstellung eine Verstärkungseinlage eines Sockels des Halters,
- Fig. 5,: den Schnitt V - V aus der Fig. 7 durch die Verstärkungseinlage des Sockels,
- Fig. 6,: den Schnitt VI - VI aus der Fig. 7 durch die Verstärkungseinlage des Sockels,
- Fig. 7,: in Draufsicht die Verstärkungseinlage des Sockels,
- Fig. 8,: in perspektivischer Darstellung, eine Versteifungseinlage der Öse,
- Fig. 9,: den Schnitt XI - XI aus der Fig. 8 durch die Versteifungseinlage der Öse,
- Fig. 10,: in Seitenansicht, eine Raste
- Fig. 11,: in Draufsicht, einen Halter mit einem angebrachten (angeclipsten) Kunststoffmantel (im Unterschied zu Fig. 1 - 3),
- Fig. 12,: den Schnitt XII - XII aus der Fig. 11, in einer Ruheposition der Öse,
- Fig. 13,: den Schnitt XIII - XIII aus der Fig. 11 in derselben Position der Öse, wie aus Fig. 11 und 12,
- Fig. 14,: in perspektivischer Darstellung, einen Halter mit eingehängtem Verzurrmittel,
- Fig. 15,: in Draufsicht, eine Verstärkungseinlage des Sockels für die Anbringung des zusätzlichen Kunststoffmantels,
- Fig. 16,: den Schnitt XVI - XVI aus der Fig. 15 durch die Verstärkungseinlage des Sockels,
- Fig. 17,: den Schnitt XVII - XVII aus der Fig. 15 durch die Verstärkungseinlage des Sockels,
- Fig. 18,: in perspektivischer Darstellung, die Verstärkungseinlage der Öse, wie aus Fig. 15 - 17,
- Fig. 19,: in Draufsicht, eine separate Ummantelung der Verstärkungseinlage des Sockels (Kunststoffmantel),
- Fig. 20,: den Schnitt XX - XX aus der Fig. 19 durch den Kunststoffmantel,
- Fig. 21,: den Schnitt XXI - XXI aus der Fig. 19 durch den Kunststoffmantel,
- Fig. 22,: den Schnitt XXII - XXII aus der Fig. 21 durch den Kunststoffmantel, und
- Fig. 23,: den Schnitt XXIII - XXIII aus der Fig. 21 durch den Kunststoffmantel.

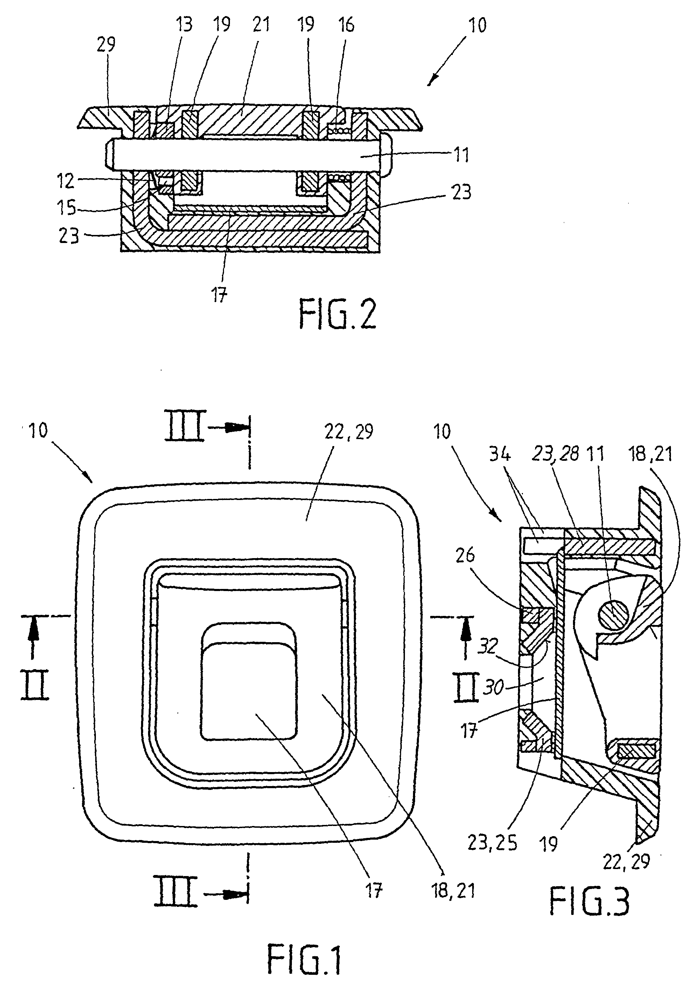

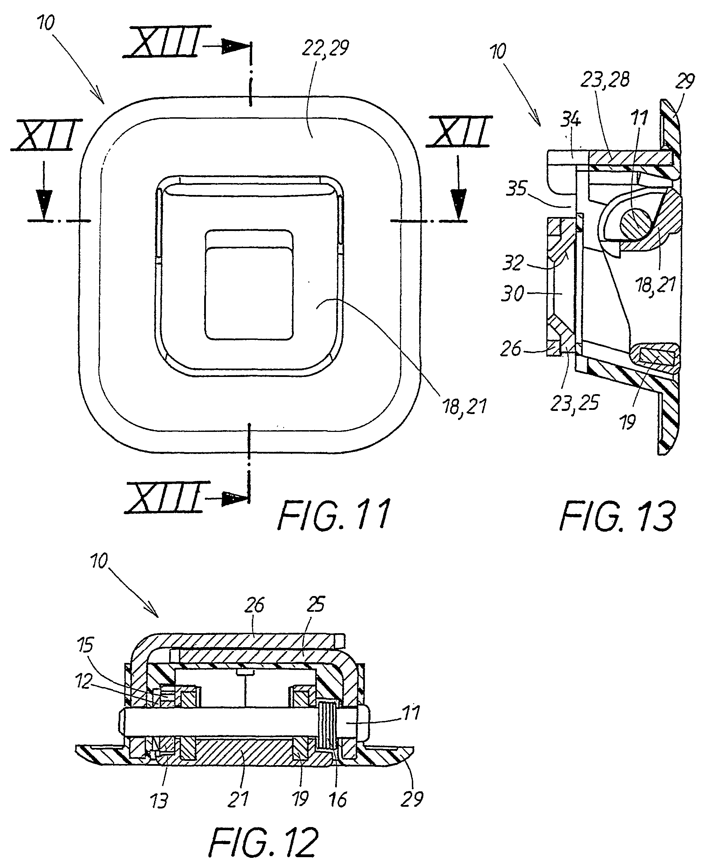

Der Halter 10 enthält einen Sockel 22 und eine Öse 18, die durch zumindest ein Verbindungsstück 11 an dem Sockel 22 schwenkbar gelagert ist. Der Sockel 22 wiederum enthält eine Verstärkungseinlage 23, die teilweise oder ganz mit Kunststoff umgeben oder ummantelt ist, wobei die Verstärkungseinlage teilkastenförmig ausgestaltet ist und einen Boden 24 und drei Seitenwände 27, 28 aufweist. Der gesamte Halter 10 wird in den Fig. 1 - 3 sowie in den Fig. 11 - 14 dargestellt. Wie schon bereits erwähnt, dient der Halter 10 zum Befestigen von Gepäckteilen oder Kindersitzen im Kraftfahrzeug. Hierzu ist er im Fahrzeug entweder im Kofferraum oder im Bereich der Rücksitzbank angeordnet. Damit der Halter 10 nicht störend angebracht ist, bildet er eine ebene Fläche mit dem Kofferraumboden oder der Sitzbank, in dem er an dieser Stelle mit seinem Sockel 22 in einer entsprechenden Vertiefung für den Sockel 22 versenkt ist. Bei einer NichtBenutzung des Halters 10 ist er daher nicht störend im Kraftfahrzeug untergebracht. Zu diesem Zweck ist auch die Öse 18 in den Sockel 22 schwenkbar, so daß die Öse 18 nicht aus dem Halter 10 herausragt, dieses soll nachfolgend als Ruheposition bezeichnet werden.

Damit der Halter 10 die Kräfte aufnehmen kann, die bei einem Unfall oder einer Vollbremsung durch die Lasten die an ihm wirken, muß die Verstärkungseinlage 23 aus einem zugfesten Material bestehen. Der Sockel 22 des Halters 10 ist kastenförmig ausgestaltet, damit er bei seiner Anbringung am Kraftfahrzeug ein gefälliges Aussehen erreicht. Ohne den kastenförmigen Sockel 22 könnte man ansonsten auf die bloße Karosserie des Kraftfahrzeuges blicken. Außerdem ließe sich Schmutz und Staub schwer aus der offenen Vertiefung entfernen. Für die Stabilität allerdings ist es ausreichend, wenn die Verstärkungseinlage 23 nur teilkastenförmig ausgestaltet ist. Die fehlende vierte Seitenwand der Verstärkungseinlage 23 ist bei dem erfindungsgemäßen Halter 10 durch Kunststoff 29 ersetzt (s. Fig. 3 und 13).

Dabei ist es besonders vorteilhaft, wenn die Verstärkungseinlage 23 mit Kunststoff 29 umspritzt ist. Dieser Kunststoff bildet einen geschlossenen Kunststoffmantel 29, der zwar das optische Aussehen und die Korrosionsbeständigkeit positiv beeinflußt, aber dabei das Gewicht des Halters 10 nur unwesentlich erhöht. Die mit Kunststoff umspritzte Verstärkungseinlage 23 ist in den Fig. 1 - 3 dargestellt.

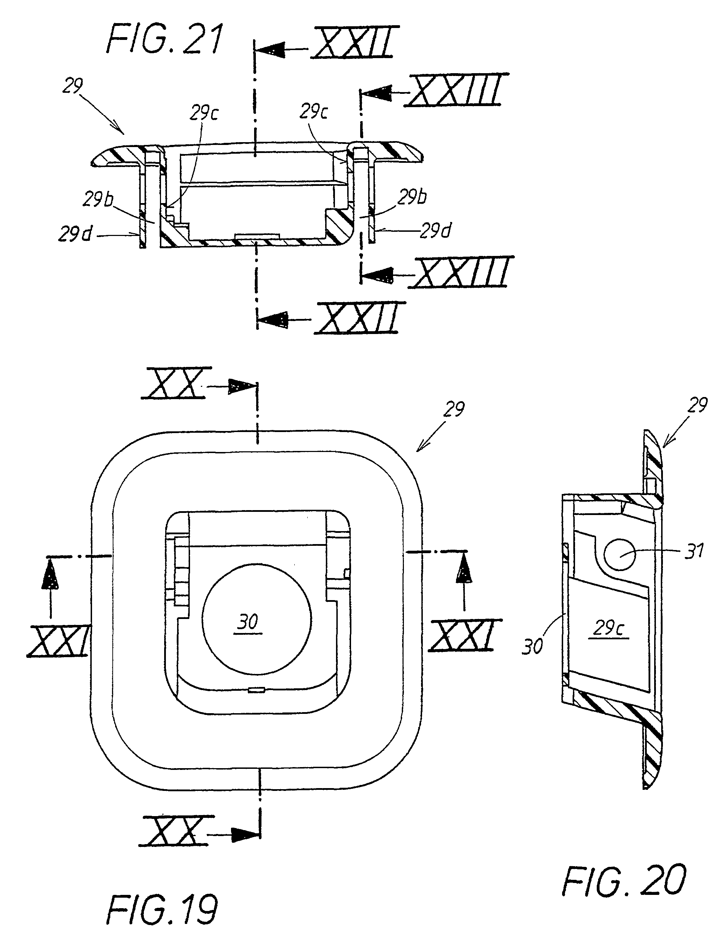

Ferner ist es denkbar, daß ein separater Kunststoffmantel 29 die Verstärkungseinlage 23 umgibt, indem dieser an der Verstärkungseinlage 23 angebracht wird. Auch dieser Kunststoffmantel 29 schützt den Sockel 22 vor Korrosion und gibt ihm ein gefälliges Aussehen. Vorteilhafterweise kann dieser Kunststoffmantel 29 unabhängig von den restlichen Teilen des Halters 10 gefertigt werden. Erst beim Zusammensetzten des Halters 10 wird der separate Kunststoffmantel 29 benötigt. Die mit dem separaten Kunststoffmantel 29 versehene Verstärkungseinlage 23 ist in den Fig. 11 - 13 gezeigt. Der separate Kunststoffmantel 29 ist nur in den Fig. 19 - 23 dargestellt.

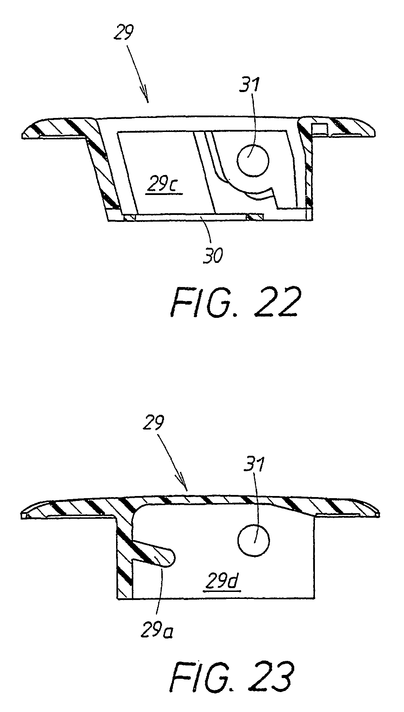

Für die Befestigung des separaten Kunststoffmantels 29 an der Verstärkungseinlage 23 wird eine Clips-Verbindung vorgeschlagen. Durch die Clips-Verbindung kann der Kunststoffmantel 29 an der Verstärkungseinlage 23 schnell, einfach und werkzeugfrei angebracht werden. Zu diesem Zweck ist die Verstärkungseinlage 23 mit Rastmitteln 27a versehen, die mit Gegenrastmitteln 29a des Kunststoffmantels 29 zusammenwirken und eine Clips-Verbindung bilden. Die Rastmittel 27a der Verstärkungseinlage 23 sind an Frontseiten zweier gegenüberliegenden Seitenwänden 27 eingebracht (s. Fig. 18). Die Gegenrastmittel 29a des Kunststoffmantels 29 liegen zwischen den Innenwänden 29c und den Außenwänden 29d, die die Schlitze 29b für die gegenüberliegenden Seitenwände 27 der Verstärkungseinlage 23 bilden. Ein Gegenrastmittel 29a ist in der Fig. 23 erkennbar. In der Fig. 21 sind deutlich die Schlitze 29b für die gegenüberliegenden Seitenwände 27 der Verstärkungseinlage 23 sichtbar. Innerhalb dieser Schlitze 29b sind die Gegenrastmittel 29a angeordnet. Beim Zusammensetzen des Halters 10 ist der separate Kunststoffmantel 29 von schräg oben, frontal auf die Verstärkungseinlage 23 zu schieben. Die Rastmittel 27a und Gegenrastmittel 29a erzeugen einen Formschluß, so daß der Kunststoffmantel 29 nicht noch oben von der Verstärkungseinlage 23 gelöst werden kann. Durch das weitere Zusammensetzen des Halters 10 wird der separate Kunststoffmantel 29 zusätzlich durch das Verbindungsteil 11 formschlüssig mit der Verstärkungseinlage 23 befestigt. Die Verstärkungseinlage 23 und der Kunststoffmantel 29 sind auf diese Art und Weise untrennbar miteinander verbunden. Nur zur Bodenseite des Halters 10 überdeckt der separate Kunststoffmantel 29 die Verstärkungseinlage 23 nicht. Der gesamte Rest der Verstärkungseinlage 23 wird vom Kunststoffmantel 29 umgeben.

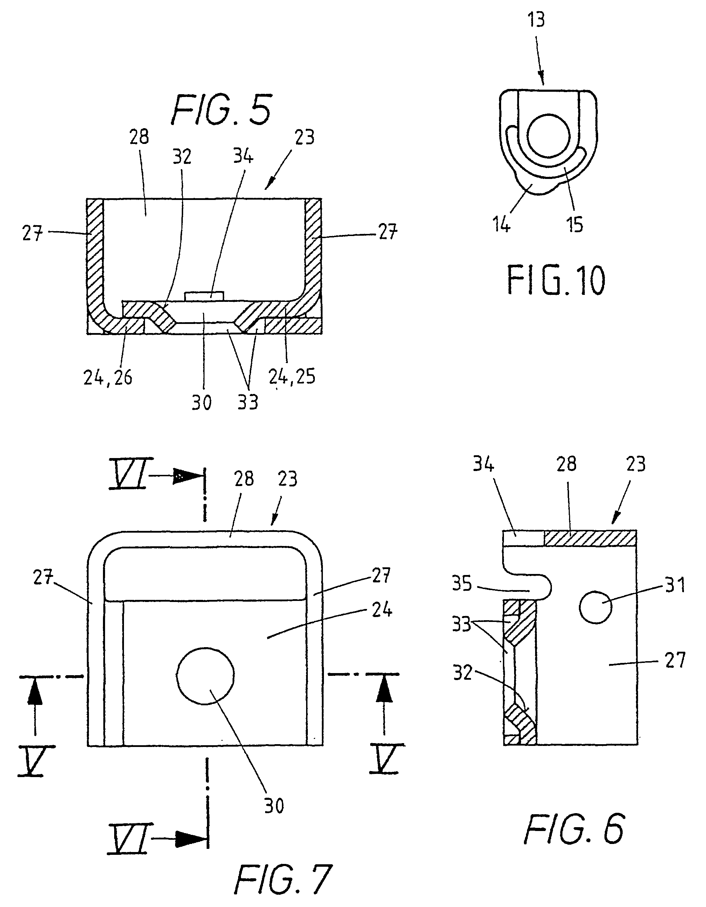

Um eine optimale Stabilität des Halters 10 zu erreichen, ist die Verstärkungseinlage 23 materialeinheitlich und einstückig und besitzt einen doppelwandigen Boden 24. Wie u. a. in der Fig. 5 und 18 dargestellt, sind die beiden Seitenwände 27 direkte zum doppelwandigen Boden 24 verbunden. Hierdurch werden die Spannungen aus den Zugkräfte des Halters 10 ebenfalls direkt an den doppelwandigen Boden 24 weitergeleitet.

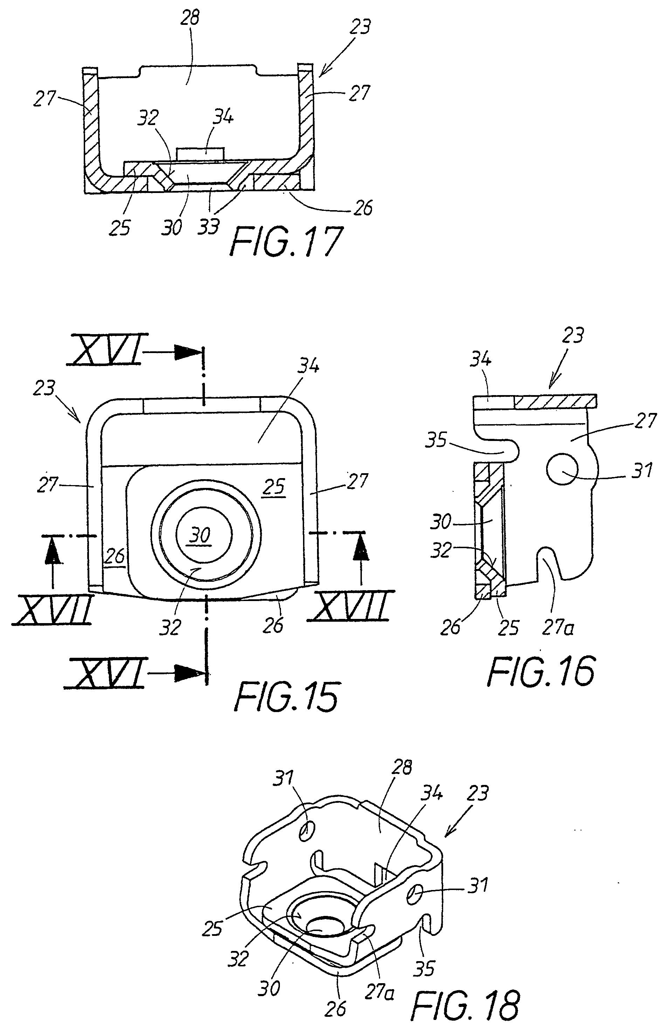

Das Verbindungsteil 11 ist mittels der Verstärkungseinlage 23 im Sockel 22 gelagert. Wie aus der Fig. 6 und 16 ersichtlich ist, befindet sich ein Befestigungsloch 31 für je eine Seitenwand 27 des Sockels 22. Selbstverständlich könnte auch das Verbindungsteil 11 anders in der Verstärkungseinlage 23 gelagert sein, z.B. durch eine zum Boden 24 hin offene Ausnahme in den Seitenwänden 27. Wichtig ist bei der Konstruktion nur, daß die auf den Halter 10 wirkenden Zugkräfte über die Verstärkungseinlage 23 auf die Karosserie übertragen werden.

Im Boden 24 des Sockels 22 ist ein Loch 30 für ein Befestigungselement 36 vorhanden, wobei das Loch 30 auch durch das Verstärkungsteil 23 verläuft. Durch das Loch 30 kann der Halter 10 z.B. mittels eine Schraube mit dem Kraftfahrzeug fest verbunden werden. Zu diesem Zweck ist das Loch 30 im Sockel 18 als eine konische Aufnahme 32 für das Befestigungselement 36 ausgebildet. Die konische Aufnahme 32 dient insbesondere zu einer Befestigung mittels einer Senkkopfschraube. Somit kann der Halter 10 mittels der Senkkopfschraube auch gleichzeitig in seiner Vertiefung im Kraftfahrzeug zentriert werden.

Die konische Aufnahme 32 ist nur in einer oberen Bodenwand 25 des doppelwandigen Bodens 24 des Sockels 22 ausgebildet und ragt in einen größeren Durchbruch 33 einer unteren Bodenwand 26 des doppelwandigen Bodens 24 hinein und nicht aus der unteren Bodenwand 26 heraus. Somit ist genügend Platz z.B. für einen Senkkopf der Schraube, um nicht aus dem doppelwandigen Boden 24 hervorzustehen. Außerdem kann durch die Überlappung der oberen Bodenwand 25 mit der unteren Bodenwand 26 der Halter 10 mit nur einem Befestigungselement am Kraftfahrzeug fixiert werden. Ist die Verstärkungseinlage 23 nicht mit einem doppelwandigen Boden 24 ausgestattet, so sollten zwei Befestigungslöcher 30 im Bodenbereich des Sockels 22 vorgesehen werden, um jede Seitenwand 27 über einen Bodenteil mit je einem Befestigungselement 36 an der Karosserie zu sichern.

Natürlich könnten die Befestigungselemente 36 auch direkt mit den Seitenwände 27 verbunden werden, dieses hätte allerdings den Nachteil, daß die Befestigungselemente 36 sehr schwer zu montieren sind. Außerdem müßte dann die Karosserie entsprechend ausgestaltet sein um die Befestigungselemente 36 aufnehmen zu können.

Vorteilhafterweise ist der Schwenkbereich der gelagerten Öse 18 durch die dritte Seitenwand 28 des Sockels 22, die zwischen den anderen beiden Seitenwänden 27 angeordnet ist, begrenzt, um den Gebrauch des Halters zu erleichtern. Die dritte Seitenwand 28 soll nachfolgend auch Rückwand genannt werden. Wie in der Fig. 7 dargestellt ist, dient die Rückwand 28 auch der Verbindung der beiden gegenüberliegend angeordneten Seitenwänden 27. Außerdem befindet sich in der Rückwand 28 eine Öffnung 34, die dazu dient, den Halter 10 unverdrehbar mit dem Fahrzeug zu verbinden. Zu diesem Zweck ragt ein festes Element der Karosserie in die Öffnung 34 hinein. Anhand der Fig. 7 ist ersichtlich, daß die Rückwand 28 keine direkte Verbindung oder nur eine Verbindung über die Seitenwände 27 mit dem doppelwandigen Boden 24 hat.

Zur weiteren Gewichtsreduzierung enthält die Öse 18 des Halters 10 ebenfalls eine Versteifungseinlage 19, die mit Kunststoff 21 umspritzt ist. Diese Versteifungseinlage 19 ist in den Fig. 8 und 9 dargestellt.

Damit der Halter 10 die Kräfte, die an der Öse 18 wirken, auf die Karosserie des Kraftfahrzeuges weiterleiten kann, ist die Öse 18 mittels der Versteifungseinlage 19 an dem Verbindungsteil 11 schwenkbar gelagert. Hierzu sind in der Versteifungseinlage 19 zwei Befestigungslöcher 20 angebracht, durch die das Verbindungsteil 11 geführt ist. Die Versteifungseinlage 19 ist U-förmig ausgebildet. Zusätzlich ist die Versteifungseinlage 19 im Bereich der Befestigungslöcher 20 verstärkt. Dieses ist deutlich aus den Fig. 8 und 9 erkennbar. Diese Verstärkung im Bereich der Befestigungslöcher 20 dient ausschließlich zur Erhöhung der Stabilität der Öse 18 und damit insgesamt vom Halter 10.

Das Verbindungsteil 11 besteht z.B. aus einem Bolzen, der durch die Öse 18 und zwei gegenüberliegende Seitenwände 27 des Sockels 22 geführt ist. Zur einfache Montage des Halters 10 wird der Bolzen durch den Sockel 22 auf der einen Seite und die Öse 18 auf der anderen Seite geschoben. Damit der Bolzen sich nicht selbständig lösen kann, wird er zusätzlich durch ein Sicherungselement 12 geschoben (siehe dazu Fig. 2 und 12). Dieses Sicherungselement 12 liegt innerhalb des Sockels 22 und der Öse 18. Eine Demontage des Halters 10 ist nur durch hohe Kraftaufwirkung in Richtung der Achse des Verbindungsteils 11 möglich. Denkbar wäre auch, zwei Verbindungsteile 11 für die Lagerung der Öse 18 zu verwenden, allerdings hätte dieses den Nachteil einer aufwendigeren Montage des Halters 10.

Vorteilhafterweise wirkt eine Feder 16 auf die Öse 18, durch die die unbelastete Öse 18 selbständig in ihre Ruheposition überführt wird. Somit ist garantiert, daß die Öse 18 nicht aus dem Halter 10 herausragt, sondern in den Sockel 22 mittels der Federkraft 16 geschwenkt wird, sobald der Halter nicht genutzt ist.

Um die Befestigung des Gepäckteils oder eines Kindersitzes an dem Halter zu erleichtern, wirkt zusätzliche eine Raste 13 auf die Öse 18, durch die die Öse 18 in einer definierten Halteposition fixiert ist. Dabei ist die Haltekraft der Raste 13 in der definierten Halteposition der Öse 18 höher als die Rückstellkraft der Feder 16, da sonst die Feder 16 die Öse 18 aus der Halteposition selbständig in die Ruheposition überführen würde. Nach dem Gebrauch des Halters 10 braucht die Öse 18 nur leicht angetippt werden, damit die Öse 18 mittels der Feder 16 in ihre Ruheposition überführt wird.

Vorteilhafterweise hat die Raste 13 einen Nocken 14, der beweglich gelagert ist, und der in einer definierten Halteposition mit einem Bereich der Öse 18 zusammenwirkt. Die Raste 13 ist in Seitenansicht in der Fig. 10 dargestellt. Das zentrierte Loch in der Mitte der Raste 12 dient zur Aufnahme des Verbindungsteils 11. Bogenförmig um dieses Loch ist ein Freiraum 15 in der Raste 13 vorhanden. Wird die Öse 18 in die Halteposition gebracht, so drückt sie auf den Nocken 14, der durch den dahinter liegenden Freiraum 15 leicht nachgeben kann. Der entstehende Druck zwischen der Öse 18 und der Raste 13 reicht aus, um die Öse 18 in der Halteposition zu fixieren. Selbstverständlich ist die Raste 13 zu diesem Zweck unverdrehbar zur Öse 18 angebracht. Durch die Lage des Nockens 14 ist die Halteposition der Öse 18 genau bestimmt.

Die Versteifungseinlage 19 kann genauso wie die Verstärkungseinlage 23 aus einem gebogenen Stahlblech bestehen. Dies hat einerseits den Vorteil, daß die Materialkosten für die Versteifungseinlage 19 und die Verstärkungseinlage 23 extrem gering sind und andererseits die Fertigung durch Biegen und Stanzen der beiden Einlagen 19 und 23 ebenfalls günstig ist.

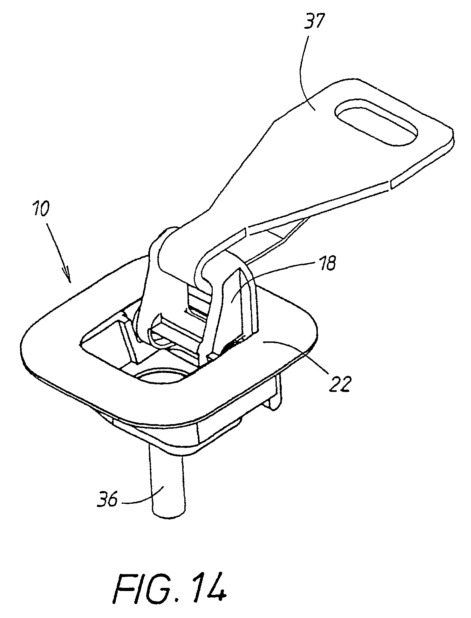

Wie aus der Fig. 1, 11 und 14 erkennbar ist, ist der Halter 10 rechteckförmig, genauso wie der Sockel 22 und die Öse 18. Selbstverständlich sind auch andere Formen für den Halter 10 denkbar. Entsprechend sind dann die Formen der Verstärkungseinlage 23 für den Sockel 22 und die Versteifungseinlage 19 für die Öse 18 anzupassen. In der Draufsicht (aus der Fig. 1 und 11) ist der Rand des kastenförmigen Sockels 22 gut erkennbar. Die Öse 18 befindet sich in dieser Darstellung in ihrer Ruheposition. Dagegen ist in Fig. 14 der gesamte Halter 10 mit einem beispielhaft dargestellten Verzurrmittel 37 gezeigt. In dieser Figur ist die Öse 18 (um ca. 90°) nach oben aus dem Halter 10 hochgeklappt und liegt an der Rückwand 28 an.

Aus der Fig.2 ist erkennbar, wie die Kraft auf den Halter durch die Öse 18 (mittels des Verbindungsteils 19) durch das Verbindungsteil 11 auf den Sockel 22 (mittels der Verstärkungseinlage 23) über ein Befestigungselement auf die Karosserie wirkt. Die Feder 16 und die Raste 13 sind rechts und links von der Öse 18 innerhalb des Sockels 22 angebracht und werden durch das Verbindungsteil 11 gehalten. Dieses stellt einerseits eine sehr platzsparende Konstruktion dar und andererseits wird die Feder 16 und die Raste 13 von der Öse 18 unsichtbar verdeckt, was das gefällige Aussehen des Halters 10 verbessert. Ebenfalls kann eine Abdeckung 17 über dem Befestigungselement des Halters 10 angebracht werden, um einen sauberen und ordentlichen Abschluß im Bodenbereich des Sockels 22 zu erwirken.

Die Fig. 3 bzw. 13 stellt einen vertikalen Schnitt durch die Fig. 1 bzw. 11 dar. Daraus ist erkennbar, daß die vierte Seitenwand des Sockels 22 nur aus einem Kunststoffmantel 29 besteht und nicht die Verstärkungseinlage 23 an dieser Stelle umfaßt. Auch ist der Rand des kastenförmigen Sockels 22 zu erkennen, der weit über die Verstärkungseinlage 23 seitlich hinausragt. Durch den breiten Rand des Sockels 22 wird ein sauberer und optisch gefälliger Abschluß zwischen dem Halter und dem Kofferraumboden oder der Sitzbank erreicht.

In den Fig. 6, 16 und 18 sind Aussparungen 35 in der Verstärkungseinlage 23 dargestellt, die die Fertigung der Verstärkungseinlage 23 beim Biegeprozeß erleichtern.

Es bleibt noch zu bemerken, daß die hier aufgeführten Ausführungsformen nur beispielhafte Verwirklichungen der Erfindung sind. Diese ist jedoch nicht darauf beschränkt. Es versteht sich, daß die dargestellten Teile und Elemente der Erfindung auch in anderen Ausführungsformen und Kombinationen vorhanden sein können, die über ähnliche Eigenschaften verfügen, wie diejenigen, die hier beschrieben sind.

### Bezugszeichenliste:

- 10: Halter
- 11: Verbindungsteil
- 12: Sicherungselement
- 13: Raste
- 14: Nocken
- 15: Freiraum
- 16: Feder
- 17: Abdeckung
- 18: Öse
- 19: Versteifungseinlage
- 20: Befestigungsloch für 11
- 21: Kunststoffmantel der Versteifungseinlage
- 22: Sockel
- 23: Verstärkungseinlage
- 24: Boden
- 25: obere Bodenwand
- 26: untere Bodenwand
- 27: gegenüberliegende Seitenwände
- 27a: Rastmittel
- 28: Seiten-/ Rückwand
- 29: Kunststoffmantel der Verstärkungseinlage
- 29a: Gegenrastmittel
- 29b: Schlitze für 27
- 29c: Innenwand
- 29d: Außenwand
- 30: Loch für Befestigungselement
- 31: Befestigungsloch für 11
- 32: konische Aufnahme
- 33: Durchbruch
- 34: Öffnung
- 35: Aussparung
- 36: Befestigungselement
- 37: Verzurrmittel

## Patentansprüche

1. Halter (10), insbesondere zum Verzurren von Gepäckteilen oder Kindersitzen im Kraftfahrzeug, der einen Sockel (22), der an einem Karosserieteil im Kraftfahrzeug fest verankerbar ist, enthält
und eine Öse (18), die durch zumindest ein Verbindungsteil (11) an dem Sockel (22) schwenkbar gelagert ist,
**dadurch gekennzeichnet,**
**daß** der Sockel (22) eine Verstärkungseinlage (23) enthält, die teilweise oder ganz mit Kunststoff (29) umgeben ist,
und die Verstärkungseinlage (23) teilkastenförmig gestaltet ist, mit einem Boden (24) und drei Seitenwänden (27, 28).

2. Halter (10) nach Anspruch 1, **dadurch gekennzeichnet, daß** die Verstärkungseinlage (23) mit Kunststoff umspritzt ist, der einen Kunststoffmantel (29) bildet.

3. Halter (10) nach Anspruch 1, **dadurch gekennzeichnet, daß** die Verstärkungseinlage (23) mit einem separaten Kunststoffmantel (29) umgeben ist, der an der Verstärkungseinlage (23) befestigbar ist.

4. Halter (10) nach Anspruch 3, **dadurch gekennzeichnet, daß** der separate Kunststoffmantel (29) an der Verstärkungseinlage (23) mittels einer Clips-Verbindung befestigt ist.

5. Halter (10) nach Anspruch 3 oder 4, **dadurch gekennzeichnet, daß** die Verstärkungseinlage (23) mit Rastmitteln (27a) versehen ist, die mit Gegenrastmitteln (29a) des separaten Kunststoffmantels (29) zusammenwirken und eine Clips-Verbindung darstellen.

6. Halter (10) einem oder mehreren Ansprüchen 1 bis 5, **dadurch gekennzeichnet, daß** die Verstärkungseinlage (23) materialeinheitlich und einstückig ist und aus einem doppelwandigen Boden (24) besteht.

7. Halter (10) einem oder mehreren Ansprüchen 1 bis 6, **dadurch gekennzeichnet, daß** das Verbindungsteil (11) mittels der Verstärkungseinlage (23) im Sockel (22) gelagert ist.

8. Halter (10) nach einem oder mehreren Ansprüchen 1 bis 7, **dadurch gekennzeichnet, daß** ein Loch (30) im Boden (24) des Sockels (22) für ein Befestigungselement (36) vorhanden ist, welches auch durch das Verstärkungsteil (23) geht.

9. Halter (10) nach Anspruch 8, **dadurch gekennzeichnet, daß** das Loch (30) im Sockel (22) als eine konische Aufnahme (32) für das Befestigungselement (36), insbesondere einer Senkkopfschraube ausgebildet ist.

10. Halter (10) nach Anspruch 9 **dadurch gekennzeichnet, daß** die konische Aufnahme (32) nur in einer oberen Bodenwand (25) des doppelwandigen Bodens (24) des Sockels (22) ausgebildet ist und in einen größeren Durchbruch (33) einer unteren Bodenwand (26) des doppelwandigen Bodens (24) hinein reicht und nicht aus der unteren Bodenwand (26) raus ragt.

11. Halter (10) nach einem oder mehreren Ansprüchen 1 bis 10, **dadurch gekennzeichnet, daß** der Schwenkbereich der gelagerten Öse (18) durch eine dritte Seitenwand (28) des Sockels (22), die zwischen den anderen beiden Seitenwänden (27) angeordnet ist, begrenzt ist.

12. Halter (10) nach einem oder mehreren Ansprüchen 1 bis 11, **dadurch gekennzeichnet, daß** eine Öffnung (34) im Sockel (22) vorhanden ist, die auch in der Verstärkungseinlage (23) ausgebildet ist, in die ein festes Element der Karosserie hineinreicht und den Halter (10) unverdrehbar mit dem Karosserieteil fixiert.

13. Halter (10) nach einem oder mehreren Ansprüchen 1 bis 12, **dadurch gekennzeichnet, daß** die Öse (18) eine Versteifungseinlage (19) enthält, die mit Kunststoff (21) umspritzt ist.

14. Halter (10) nach einem oder mehreren Ansprüchen 1 bis 13, **dadurch gekennzeichnet, daß** die Öse (18) mittels der Versteifungseinlage (19) an dem Verbindungsteil (11) schwenkbar gelagert ist.

15. Halter (10) nach einem oder mehreren Ansprüchen 1 bis 14, **dadurch gekennzeichnet, daß** die Öse (18) durch einen Bolzen als Verbindungsteil (11) in zwei gegenüberliegende Seitenwänden (27) des Sockels (22) gelagert ist.

16. Halter (10) nach einem oder mehreren Ansprüchen 1 bis 15, **dadurch gekennzeichnet, daß** eine Feder (16) auf die Öse (18) wirkt, durch die die unbelastete Öse (18) in eine Ruheposition überführbar ist.

17. Halter (10) nach einem oder mehreren Ansprüchen 1 bis 16, **dadurch gekennzeichnet, daß** eine Raste (13) auf die Öse (18) wirkt, durch die die Öse (18) in einer definierten Halteposition fixiert ist.

18. Halter (10) nach einem oder mehreren Ansprüchen 1 bis 17, **dadurch gekennzeichnet, daß** die Raste (13) einen Nocken (14) hat, der beweglich gelagert ist, und der Nocken (14) in der definierten Halteposition mit einem Bereich der Öse (18) zusammenwirkt.

19. Halter nach einem oder mehreren Ansprüchen 1 bis 18, **dadurch gekennzeichnet, daß** die Versteifungseinlage (19) und/oder die Verstärkungseinlage (23) aus gebogenen Stahlblechen bestehen.

## Claims

1. Fixture (10), in particular for tying down items of luggage or child seats in a motor vehicle, comprising a frame (22), which is firmly anchorable to a body part in the motor vehicle,
and an eye (18), which is pivotally mounted by means of at least one connecting part (11) on the frame (2),
**characterized in**
**that** the frame (22) comprises a reinforcing insert (23), which is partially or completely surrounded by plastics material (29),
and the reinforcing insert (23) is fashioned in the shape of a partial box having a base (24) and three side walls (27, 28).

2. Fixture (10) according to claim 1, **characterized in that** the reinforcing insert (23) is extrusion-coated with plastics material, which forms a plastic casing (29) .

3. Fixture (10) according to claim 1, **characterized in that** the reinforcing insert (23) is surrounded by a separate plastic casing (29), which is fastenable to the reinforcing insert (23).

4. Fixture (10) according to claim 3, **characterized in that** the separate plastic casing (29) is fastened to the reinforcing insert (23) by means of a clip connection.

5. Fixture (10) according to claim 3 or 4, **characterized in that** the reinforcing insert (23) is provided with detent means (27a), which interact with counterpart detent means (29a) of the separate plastic casing (29) and form a clip connection.

6. Fixture (10) according to one or more of claims 1 to 5, **characterized in that** the reinforcing insert (23) is of a uniform material and integral construction and comprises a double-walled base (24).

7. Fixture (10) according to one or more of claims 1 to 6, **characterized in that** the connecting part (11) is mounted by means of the reinforcing insert (23) in the frame (22).

8. Fixture (10) according to one or more of claims 1 to 7, **characterized in that** a hole (30) is provided in the base (24) of the frame (22) for a fastening element (36) and passes also through the reinforcing part (23).

9. Fixture (10) according to claim 8, **characterized in that** the hole (30) in the frame (22) is designed as a conical receiver (32) for the fastening element (36), in particular of a countersunk head screw.

10. Fixture (10) according to claim 9, **characterized in that** the conical receiver (32) is formed only in an upper base wall (25) of the double-walled base (24) of the frame (22) and extends into a larger through-hole (33) of a lower base wall (26) of the double-walled base (24) and does not project from the lower base wall (26).

11. Fixture (10) according to one or more of claims 1 to 10, **characterized in that** the swivelling range of the mounted eye (18) is limited by a third side wall (28) of the frame (22) that is disposed between the other two side walls (27).

12. Fixture (10) according to one or more of claims 1 to 11, **characterized in that** in the frame (22) an opening (34) is provided, which is also formed in the reinforcing insert (23) and into which a fixed element of the body extends and fastens the fixture (10) non-rotatably to the body part.

13. Fixture (10) according to one or more of claims 1 to 12, **characterized in that** the eye (18) comprises a stiffening insert (19), which is extrusion-coated with plastics material (21).

14. Fixture (10) according to one or more of claims 1 to 13, **characterized in that** the eye (18) is pivotally mounted by means of the stiffening insert (19) on the connecting part (11).

15. Fixture (10) according to one or more of claims 1 to 14, **characterized in that** the eye (18) is mounted by means of a bolt as connecting part (11) into two opposite side walls (27) of the frame (22).

16. Fixture (10) according to one or more of claims 1 to 15, **characterized in that** acting upon the eye (18) is a spring (16), by means of which the unloaded eye (18) is transferable into an inoperative position.

17. Fixture (10) according to one or more of claims 1 to 16, **characterized in that** acting upon the eye (18) is a detent (13), by means of which the eye (18) is fixed in a defined holding position.

18. Fixture (10) according to one or more of claims 1 to 17, **characterized in that** the detent (13) has a cam (14), which is mounted in a movable manner, and the cam (14) in the defined holding.position interacts with a region of the eye (18).

19. Fixture (10) according to one or more of claims 1 to 18, **characterized in that** the stiffening insert (19) and/or the reinforcing insert (23) comprise bent steel plates.

## Revendications

1. Support (10), en particulier pour amarrer des éléments de bagages ou des sièges pour enfants dans un véhicule automobile, contenant un socle (22), pouvant être ancré rigidement sur une partie de carrosserie dans le véhicule automobile
et un oeillet (18), monté à pivotement sur le socle (22), à l'aide d'au moins une pièce de liaison (11),
**caractérisé en ce que**
le socle (22) contient un insert de renforcement (23) entouré, partiellement ou en totalité, par de la matière synthétique (29),
et l'insert de renforcement (23) étant conformé en caisson partiel avec un fond (24) et trois parois latérales (27, 28).

2. Support (10) selon la revendication 1, **caractérisé en ce que** l'insert de renforcement (23) est enrobé par injection de matière synthétique formant une enveloppe en matière synthétique (29).

3. Support (10) selon la revendication 1, **caractérisé en ce que** l'insert de renforcement (23) est entouré d'une enveloppe de matière synthétique (29) séparée, susceptible d'être fixée sur l'insert de renforcement (23).

4. Support (10) selon la revendication 3, **caractérisé en ce que** l'enveloppe de matière synthétique (29) séparée est fixée sur l'insert de renforcement (23) à l'aide d'une liaison par encliquetage.

5. Support (10) selon la revendication 3 ou 4, **caractérisé en ce que** l'insert de renforcement (23) est muni de moyens d'encliquetage (27a) qui coopèrent avec des moyens d'encliquetage conjugués (29a) de l'enveloppe en matière synthétique (29) séparée et constituent une liaison à encliquetage.

6. Support (10) selon l'une ou plusieurs des revendications 1 à 5, **caractérisé en ce que** l'insert de renforcement (23) est réalisé de façon unitaire quant au matériau et monobloc, et est formé d'un fond (24) à double paroi.

7. Support (10) selon l'une ou plusieurs des revendications 1 à 6, **caractérisé en ce que** la partie de liaison (11) est montée dans le socle (22) à l'aide de l'insert de renforcement (23).

8. Support (10) selon l'une ou plusieurs des revendications 1 à 7, **caractérisé en ce qu'**un trou (30) est prévu dans le fond (24) du socle (22), pour placer un élément de fixation (36) qui traverse également la partie d'ancrage (23).

9. Support (10) selon la revendication 8, **caractérisé en ce que** le trou (30) ménagé dans le socle (22) est réalisé en logement (32) conique pour l'élément de fixation (36), en particulier une vis à tête noyée.

10. Support (10) selon la revendication 9, **caractérisé en ce que** le logement conique (32) n'est réalisé que dans une paroi de fond supérieur (25) du fond (24) à double paroi du socle (22), et pénètre dans une traversée (33) plus grande d'une paroi de fond inférieure (26) du fond (24) à double paroi et ne ressort pas de la paroi de fond inférieure (26).

11. Support (10) selon l'une ou plusieurs des revendications 1 à 10, **caractérisé en ce que** la plage de pivotement de l'oeillet (18), monté à rotation, est limitée par une troisième paroi latérale (28) du socle (22), disposée entre les deux autres parois latérales (27).

12. Support (10) selon l'une ou plusieurs revendications 1 à 11, **caractérisé en ce qu'**est prévue dans le socle (22) une ouverture (34), réalisée également dans l'insert de renforcement (23), ouverture dans laquelle un élément fixe de la carrosserie pénètre et fixe le support (10) à la partie de carrosserie, de façon immobilisée en rotation.

13. Support (10) selon l'une ou plusieurs des revendications 1 à 12, **caractérisé en ce que** l'oeillet (18) contient un insert de rigidification (19), enrobé par injection, par de la matière synthétique (21).

14. Support (10) selon l'une ou plusieurs des revendications 1 à 13, **caractérisé en ce que** l'oeillet (18) est monté à pivotement sur la partie de liaison (11), à l'aide de l'insert de rigidification (19).

15. Support (10) selon l'une ou plusieurs des revendications 1 à 14, **caractérisé en ce que** l'oeillet (18) est monté dans deux parois latérales (27) opposées du socle (22), au moyen d'un boulon faisant office d'élément de liaison (11).

16. Support (10) selon l'une ou plusieurs des revendications 1 à 15, **caractérisé en ce que** sur l'oeillet (18) agit un ressort (16), au moyen duquel l'oeillet (18) non chargé peut être chargé à une position de repos.

17. Support (10) selon l'une ou plusieurs des revendications 1 à 16, **caractérisé en ce que** sur l'oeillet (18) agit un cliquet (13) au moyen duquel l'oeillet (18) est fixé en une position de maintien définie.

18. Support (10) selon l'une ou plusieurs des revendications 1 à 17, **caractérisé en ce que** le cliquet (13) présente une came (14) montée de façon mobile, et la came (14) coopère, à la position de maintien définie, avec une zone de l'oeillet (18).

19. Support (10) selon l'une ou plusieurs des revendications 1 à 18, **caractérisé en ce que** l'insert de rigidification (19) et/ou l'insert de renforcement (23) sont formés en tôle d'acier pliée.
